(19) Europäisches Patentamt
European Patent Office
Office européen des brevets

(11) **EP 3 638 030 B1**

(12) **EUROPEAN PATENT SPECIFICATION**

(45) Date of publication and mention
of the grant of the patent:
**24.03.2021 Bulletin 2021/12**

(51) Int Cl.:
**A01N 37/36** (2006.01)    **A01N 31/04** (2006.01)
**A01P 1/00** (2006.01)

(21) Application number: **18730164.3**

(22) Date of filing: **02.05.2018**

(86) International application number:
**PCT/US2018/030614**

(87) International publication number:
**WO 2018/231354 (20.12.2018 Gazette 2018/51)**

(54) **MICROBICIDAL COMPOSITION**

MIKROBIZIDE ZUSAMMENSETZUNG

COMPOSITION MICROBICIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2017 US 201762520602 P**

(43) Date of publication of application:
**22.04.2020 Bulletin 2020/17**

(73) Proprietor: **DDP Specialty Electronic Materials US 8, LLC**
**Wilmington, DE 19805 (US)**

(72) Inventors:
• **DIEHL, Megan Anne**
  **Collegeville, PA 19426 (US)**

• **PAREEK, Kiran**
  **Collegeville, PA 19426 (US)**
• **DAVE, Hiteshkumar**
  **Collegeville, PA 19426 (US)**

(74) Representative: **Houghton, Mark Phillip**
**Patent Outsourcing Limited**
**Corner House**
**1 King Street**
**Bakewell**
**Derbyshire DE45 1DZ (GB)**

(56) References cited:
**EP-A1- 0 640 285       WO-A1-01/10402**
**US-A1- 2007 027 119**

**Description**

This invention relates to microbicidal compositions containing lactic acid and phenethyl alcohol.

In some cases, commercial microbicides cannot provide effective control of certain microorganisms, even at high use concentrations, due to weak activity against certain types of microorganisms, e.g., those resistant to some microbicides, or due to aggressive environmental conditions. Combinations of different microbicides are sometimes used to provide overall control of microorganisms in a particular end use environment. However, there is still a need for additional combinations of microbicides, or combinations of microbicides with formulation ingredients or raw materials, or combinations of multifunctional ingredients, having enhanced activity against various strains of microorganisms to provide effective control of such microorganisms. In addition, there is still a need for combinations containing lower levels of individual microbicides for environmental and economic benefit. US 20160000094 is an example of one such case where microbicides are combined to control the growth of a microbial population. In the cited reference, lactic acid and phenethyl alcohol are disclosed, however, lactic acid when combined with other microbicide does not demonstrate an enhanced effect. US2007027119 discloses the higher antimicrobial protection obtained when an organic acid is combined with a low molecular alcohol. In particular, the synergy between lactic acid and benzyl alcohol or isopropyl alcohol is disclosed. The problem addressed by this invention is to provide such additional combinations that demonstrate a synergistic effect.

The present invention is directed to a synergistic microbicidal composition comprising lactic acid and phenethyl alcohol, wherein the weight ratio of lactic acid to phenethyl alcohol is 4:1 to 1:1.25.

The present invention is further directed to a method of using the synergistic microbicidal composition comprising lactic acid and phenethyl alcohol by adding the composition into a cosmetic or toiletry product such as lotion, hair styling cream, paste, or gum, conditioner, shampoo, body wash, shower gel, liquid soap, sunscreen lotion and spray, tanning lotion, skin care lotion, one and two-part hair dye, permanent waving formulation, micellar water, cleanser, mask solutions, and wet wipes; and household, industrial and institutional products such as soap, laundry detergents, fabric softener, automatic and manual dish wash, polishes and cleaners.

The present invention is further directed to a cosmetic, toiletry, or household, industrial and institutional product comprising the synergistic combination of lactic acid and phenethyl alcohol.

As used herein, the following terms have the designated definitions, unless the context clearly indicates otherwise. The term "microorganism" includes, for example, fungi (such as yeast and mold), bacteria, and algae. The term "locus" refers to an industrial system or product, a personal care system or product, or a home care system or product subject to contamination by microorganisms. The term "compound" refers to a microbicide, a formulation ingredient, or a raw material. The following abbreviations are used throughout this specification: ppm = parts per million by weight (weight/weight), mL = milliliter, ATCC = American Type Culture Collection, and MIC = minimum inhibitory concentration. Unless otherwise specified, temperatures are in degrees centigrade (°C), and references to percentages (%) are by weight. Amounts of organic microbicides are given on an active ingredient basis in ppm (w/w). Ratios are by weight and may be expressed as, for example, 1/400 or 1:400.

The compositions of the present invention unexpectedly have been found to provide enhanced microbicidal efficacy at an active ingredient level lower than what would be expected for a combination of the individual components, based on their individual efficacy.

The synergistic microbicidal composition of the present invention comprises lactic acid and phenethyl alcohol. Lactic acid is also known as 2-hydroxypropanoic acid and is (CAS No. 50-21-5). Phenethyl alcohol is also known as 2-phenylethan-1-ol and is (CAS No. 60-12-8). The weight ratio of the lactic acid to phenethyl alcohol is from 4:1 to 1:1.25.

The compounds of this invention may be used "as is" or may first be formulated with a solvent or a solid carrier. Suitable solvents include, for example, water; glycol ethers such as phenoxyethanol, phenoxypropanol, dipropyleneglycol phenylether; alkyl glycerin ethers such as ethylhexylglycerin, cyclohexylglycerin, hexyl glycerin, glyceryl lauryl ether; alcohols, such as, for example, methanol, ethanol, propanol, phenethyl alcohol; diols such as propanediol, butanediol, pentanediol, pentylenediol, hexanediol, octanediol, decanediol, dodecanediol; ; ketones, such as, for example, acetone and methyl ethyl ketone; esters, such as, for example, glyceryl caprylate/caprate, sorbitol caprylate; and mixtures thereof. It is preferred that the solvent is selected from water, glycols, glycol ethers, and mixtures thereof. Suitable solid carriers include, for example, cyclodextrin, silicas, diatomaceous earth, waxes, cellulosic materials, alkali and alkaline earth (e.g., sodium, magnesium, potassium) metal salts (e.g., chloride, nitrate, bromide, sulfate), and charcoal.

When a compound is formulated in a solvent, the formulation may optionally contain surfactants. When such formulations contain surfactants, they are generally in the form of emulsion concentrates, emulsions, microemulsion concentrates, or microemulsions.

Emulsion concentrates form emulsions upon the addition of a sufficient amount of water. Microemulsion concentrates form microemulsions upon the addition of a sufficient amount of water. Such emulsion and microemulsion concentrates are generally well known in the art; it is preferred that such formulations are free of surfactants. U.S. Patent No. 5,444,078 may be consulted for further general and specific details on the preparation of various microemulsions and microemulsion concentrates.

A compound also may be formulated in the form of a dispersion. The solvent component of the dispersion may be an organic solvent or water, preferably water. Such dispersions may contain adjuvants such as, for example, co-solvents, thickeners, anti-freeze agents, dispersants, fillers, pigments, surfactants, biodispersants, sulfosuccinates, terpenes, furanones, polycations, stabilizers, scale inhibitors, and anti-corrosion additives.

When the compound is first formulated with a solvent, the solvent used for the first component may be the same as or different from the solvent used to formulate the other component. Water is the preferred for many biocide applications. It is preferred that the two solvents are miscible.

Those skilled in the art will recognize that the compounds of the present invention may be added to a locus sequentially, simultaneously, or may be combined before being added to the locus. In one embodiment of the invention, the first component and the second component are added to a locus simultaneously or sequentially. When the components are added simultaneously or sequentially, each may independently contain adjuvants, such as, for example, solvent, thickeners, anti-freeze agents, colorants, sequestrants (such as ethylenediamine-tetraacetic acid, ethylenediaminedisuccinic acid, iminodisuccinic acid and salts thereof), dispersants, surfactants, biodispersants, sulfosuccinates, terpenes, furanones, polycations, stabilizers, scale inhibitors and anti-corrosion additives.

The compositions of the present invention can be used to inhibit the growth of microorganisms or higher forms of aquatic life (such as protozoans, invertebrates, bryozoans, dinoflagellates, crustaceans, mollusks, etc) by introducing a microbicidally effective amount of the compositions onto, into, or at a locus subject to microbial attack. Suitable loci include, for example: industrial process water; electrocoat deposition systems,; cooling towers; air washers; gas scrubbers; mineral slurries; wastewater treatment; ornamental fountains; reverse osmosis filtration; ultrafiltration; ballast water; evaporative condensers; heat exchangers; pulp and paper processing fluids and additives; starch; plastics; emulsions; dispersions; paints; latices; coatings, such as varnishes; construction products, such as mastics, caulks, and sealants; construction adhesives, such as ceramic adhesives, carpet backing adhesives, and laminating adhesives; industrial or consumer adhesives; photographic chemicals; printing fluids; household and personal care products, such as, for example, bathroom and kitchen cleaners; cosmetics; lotions, moisturizers, toiletries; hair styling creams, pastes, or gums; conditioners, 2 in 1 conditioning shampoos, body wash/shower gels, liquid soaps, sunscreen lotions and sprays, tanning lotions, skin care lotions, one and two-part hair dyes, permanent waving formulations, soaps; detergents; cleaners; floor polishes; laundry rinse water; metalworking fluids; conveyor lubricants; hydraulic fluids; leather and leather products; textiles; textile products; wood and wood products, such as, for example, plywood, chipboard, flakeboard, laminated beams, oriented strandboard, hardboard, and particleboard; petroleum processing fluids; fuel; oilfield fluids, such as injection water, fracture fluids, and drilling muds; agriculture adjuvant preservation; surfactant preservation; medical devices; diagnostic reagent preservation; food preservation, such as plastic or paper food wrap; food, beverage, and industrial process pasteurizers; toilet bowls; recreational water; pools; and spas.

In one embodiment, the compositions of the present invention are used to inhibit the growth of microorganisms at a locus selected from one or more of cosmetic, lotion, toiletry, hair styling cream, paste, or gum, conditioner, shampoo, body wash, shower gel, liquid soap, sunscreen lotion and spray, tanning lotion, skin care lotion, one and two-part hair dye, permanent waving formulation, micellar water, cleanser, mask solutions, wet wipe solutions, soap, liquid laundry detergents, fabric softener, liquid and solid dish wash, and cleaning solutions.

Materials and Methods

The synergism of the combination of the present invention was demonstrated by testing a wide range of concentrations and ratios of the compounds.

One measure of synergism is the industrially accepted method described by Kull, F.C.; Eisman, P.C.; Sylwestrowicz, H.D. and Mayer, R.L., in Applied Microbiology 9:538-541 (1961), using the ratio determined by the formula:

$$Q_a/Q_A + Q_b/Q_B = \text{Synergy Index ("SI")}$$

wherein:

$Q_A$ = concentration of compound A (first component) in ppm, acting alone, which produced an end point (MIC of Compound A).
$Q_a$ = concentration of compound A in ppm, in the mixture, which produced an end point.
$Q_B$ = concentration of compound B (second component) in ppm, acting alone, which produced an end point (MIC of Compound B).
$Q_b$ = concentration of compound B in ppm, in the mixture, which produced an end point.

When the sum of $Q_a/Q_A$ and $Q_b/Q_B$ is greater than one, antagonism is indicated. When the sum is equal to one, additivity is indicated, and when less than one, synergy is demonstrated. The lower the SI, the greater is the synergy shown by that particular mixture. The minimum inhibitory concentration (MIC) of a microbicide is the lowest concentration tested under a specific set of conditions that prevents the growth of the tested microorganisms.

Synergy tests were conducted using standard microtiter plate assays with media designed for optimal growth of the test microorganism. Potato Dextrose Broth (PDB medium) was used for testing yeast and mold. In this method, a wide range of combinations of microbicides and other personal care raw materials was tested by conducting high resolution MIC assays in the presence of lactic acid. High resolution MICs were determined by adding varying amounts of microbicide to one column of a microtitre plate and doing subsequent ten-fold dilutions using an automated liquid handling system to obtain a series of closely spaced endpoints.

The synergy of the combinations of the present invention was determined against a yeast, *Candida albicans* (*C. albicans* -- ATCC 10231) and a mold, *Aspergillus brasiliensis* (*A. brasiliensis* -- ATCC 16404). The yeast and mold were used at concentrations of $5 \times 10^5$ cells per mL. These microorganisms are representative of natural contaminants in many consumer and industrial applications. The plates were visually evaluated for microbial growth (turbidity) to determine the MIC after various incubation times at 25° C.

The test results for demonstration of synergy of the combinations of the present invention are shown below in Table 1. In this test, First Component (A) was lactic acid and the Second Component (B) was phenethyl alcohol. Table 1 shows the specific combinations of lactic acid and phenethyl alcohol; results against the microorganisms tested with incubation times; the end-point activity in ppm measured by the MIC for lactic acid alone ($Q_A$), for phenethyl alcohol alone ($Q_B$), for lactic acid in the mixture ($Q_a$) and for phenethyl alcohol in the mixture ($Q_b$); the calculated SI value; and the range of synergistic ratios for each combination tested (lactic acid/ phenethyl alcohol or A/B).

In each of the comparisons, the effective synergistic ratio may vary among the microorganisms tested and the various combinations of components A and B. Data in the tables below include the range of ratios that were found to be synergistic. Not all data which were collected outside of the synergistic ranges are reported.

Tables

First Component (A) =       lactic acid (LA)

Second Component (B) =    phenethyl alcohol (PEA)

Table 1

*Aspergillus brasiliensis*

ATCC 16404

Potato Dextrose Broth

Contact Time = 3 days

Table 2

*Candida albicans*

ATCC 10231

Potato Dextrose Broth

Contact Time = 48 hours

**Table 1**

| Ratio | Lactic Acid, ppm | Phenethyl Alcohol, ppm | SI |
|---|---|---|---|
| | 30,000 | 0 | 1.00 |
| 4:1 | 10,000 | 2,499 | 0.58 |
| 3.3:1 | 10,000 | 3,001 | 0.63 |
| 2.5:1 | 10,000 | 4,002 | 0.73 |
| 2:1 | 10,000 | 5,000 | 0.83 |
| 2:1 | 8,000 | 4,002 | 0.67 |
| 1.2:1 | 6,000 | 5,000 | 0.70 |
| 1:1.25 | 4,000 | 5,000 | 0.63 |
| | 0 | 9,996 | 1.00 |

**Table 2**

| Ratio | Lactic acid, ppm | Phenethyl alcohol, ppm | SI |
|---|---|---|---|
| | 6,000 | 0 | 1.00 |
| 2.67:1 | 4,000 | 1,499 | 0.82 |
| 2:1 | 4,000 | 1,999 | 0.87 |
| | 0 | 9,996 | 1.00 |

The synergistic ratios of lactic acid / phenethyl alcohol range from 4:1 to 1:1.25. The lactic acid / phenethyl alcohol combinations show enhanced control of fungi (yeast, and mold).

**Claims**

1. A synergistic microbicidal composition comprising of lactic acid and phenethyl alcohol, wherein the weight ratio of lactic acid to phenethyl alcohol is 4:1 to 1:1.25.

2. A method of using the synergistic microbial composition of claim 1 comprising adding the composition of claim 1 into a cosmetic, toiletry, or household, industrial and institutional products.

3. A cosmetic, toiletry, or household, industrial and institutional products containing the synergistic microbicidal composition of claim 1.

**Patentansprüche**

1. Synergistische mikrobizide Zusammensetzung umfassend Milchsäure und Phenethylalkohol, wobei das Gewichtsverhältnis von Milchsäure zu Phenethylalkohol 4:1 bis 1:1,25 beträgt.

2. Verfahren zum Verwenden der synergistischen mikrobiziden Zusammensetzung nach Anspruch 1, umfassend Eingeben der Zusammensetzung nach Anspruch 1 in ein kosmetisches, Toiletten- oder Haushalt-, industrielles und institutionelles Produkt.

3. Kosmetische, Toiletten- oder Haushalt-, industrielle und institutionelle Produkte, die die synergistische mikrobizide Zusammensetzung nach Anspruch 1 enthalten.

**Revendications**

1. Composition microbicide synergique comprenant de l'acide lactique et de l'alcool phénéthylique, dans laquelle le rapport en poids de l'acide lactique sur l'alcool phénéthylique est de 4:1 à 1:1,25.

2. Méthode pour l'utilisation de la composition microbicide synergique selon la revendication 1 comprenant l'ajout de la composition selon la revendication 1 dans des produits cosmétiques, de toilette ou ménagers, industriels et institutionnels.

3. Produits cosmétiques, de toilette ou ménagers, industriels et institutionnels contenant la composition microbicide synergique selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160000094 A
- US 2007027119 A
- US 5444078 A

**Non-patent literature cited in the description**

- *CHEMICAL ABSTRACTS,* 50-21-5
- *CHEMICAL ABSTRACTS,* 60-12-8
- **KULL, F.C. ; EISMAN, P.C. ; SYLWESTROWICZ, H.D. ; MAYER, R.L.** *Applied Microbiology,* 1961, vol. 9, 538-541